# EUROPEAN PATENT APPLICATION

(11) **EP 1 067 792 A2**
(43) Date of publication of application: **10.01.2001**
(21) Application number: 00305536.5
(22) Date of filing: 30.06.2000
(51) Int. Cl.: H04N 7/16, H04N 7/088, H04N 7/24

(54) **System for targeted advertising**

(30) Priority: 09.07.1999 US 350826
(71) Applicant: International Business Machines Corporation, Armonk, NY 10504 (US)
(72) Inventor: Stern, Edith H., c/o IBM United Kingdon Ltd., Winchester, Hampshire SO21 2JN (GB); Willner, Barry E., c/o IBM United Kingdon Ltd., Winchester, Hampshire SO21 2JN (GB)
(74) Representative: Waldner, Philip

(57) **Abstract**

A method for displaying advertising includes the following steps: (1) storing advertising, comprising a plurality of commercials, within a storage area in a viewer unit ; (2) receiving program content via a network for display; (3) recognizing a trigger, wherein the trigger calls for display of a commercial; searching for the commercial within the storage area; and (4) displaying the commercial when the commercial is located within the storage area. The method can be performed at a cable set-top box, a television unit with appropriate storage and adapted to perform the method. The method can also be performed with any end-user or client unit connected to a network such as the Internet.

## Description

### BACKGROUND OF THE INVENTION

The invention relates to the field of transmission of video programs and more specifically to a system for advertising in a cable television network.

Advertising today is very inefficient. Advertisers buy time on a program, or a cable channel and can only hope their message will be received by their desired audience. In the future, it will be desirable to improve this by targeted advertising, where ads are directed to appropriate audience members by the broadcasters, or cable company, acting with knowledge of the demographics desired. Thus, for example, a football game might have beer commercials directed to demographics for ages eighteen to thirty-five, sports equipment commercials directed to those under eighteen, and season ticket commercials directed to those over thirty-five. Accordingly a need exists for an advertising system overcoming the detriments of the prior art.

### SUMMARY OF THE INVENTION

According to one aspect of the invention there is provided a method for displaying advertising characterised by: storing advertising, comprising a plurality of commercials, within a storage area in a viewer unit; recognizing program content, via a network, for display thereof; receiving a trigger, wherein the trigger calls for display of at least one specified commercial from the stored commercials; and displaying the at least one selected commercial responsive to the trigger, wherein the at least one selected commercial is selected based on viewer characters.

According to a second aspect of the invention there is provided a method for displaying advertising comprising: transmitting advertising to a viewer unit, the advertising comprising a plurality of commercials, for storage within a storage area in a viewer unit; transmitting program content to the viewer unit via a network for display at the viewer unit; and triggering a display of at least one selected commercial from the plurality of commercials stored at the viewer unit, wherein the at least one commercial to be displayed responsive to the triggering, is selected as a function of viewer demographics.

According to a third aspect of the invention there is provided a playout device characterised by: a receiver for receiving program content from a source and for displaying the signals in a display device; storage space for storing at least parts of the received program content and for storing advertising comprising commercials; and means for inserting the stored advertising in received program content, responsive to receiving a trigger.

According to a fourth aspect of the invention there is provided a machine-readable medium characterised by program instructions for: storing advertising, comprising a plurality of commercials, within a storage area in a viewer unit; receiving program content, via a network, for display thereof; recognizing a trigger, wherein the trigger calls for display of at least one specified commercial from the stored commercials; and displaying the at least one selected commercial responsive to the trigger, wherein the at least one selected commercial is selected based on viewer characteristics.

According to a fifth aspect of the present invention there is provided a machine-readable medium comprising instructions for: transmitting advertising to a viewer unit, the advertising comprising a plurality of commercials, for storage within a storage area in a viewer unit; transmitting program content to the viewer unit via a network for display at the viewer unit; and triggering a display of at least one selected commercial from the plurality of commercials stored at the viewer unit, wherein the at least one commercial to be displayed responsive to the triggering, is selected as a function of viewer demographics.

According to a sixth aspect of the invention there is provided a method for selling advertising by a provider of audio/video programming comprising; receiving information relating to viewers receiving the audio/video programming; providing the information to advertisers; transmitting program content to a plurality of viewers; providing a plurality of commercials to the viewers for storage at a viewer storage device; transmitting a trigger for causing transmission of selected commercials to selected viewers at selected times; and receiving payment from the advertises for triggering the display of selected commercials to selected viewers at selected times, wherein each of the selected commercials and selected times are selected by the advertiser on the basis of the demographics or characteristics of the viewers that receive the triggers associated with said selected commercials and selected times.

### BRIEF DESCRIPTION OF THE DRAWINGS

FIG. 1 shows a cable plant and its customers.
FIG. 2 shows an illustration of a cable plant and a plurality of customers with receiving groups identified.
FIG. 3 illustrates business relationships according to an aspect of the invention.
FIG. 4A shows a viewer unit at a user's household.
FIG. 4B shows advertising insertion into received program content.
FIG. 5 is a flow chart illustrating a method according to an aspect of the invention.

### DETAILED DESCRIPTION OF AN EMBODIMENT

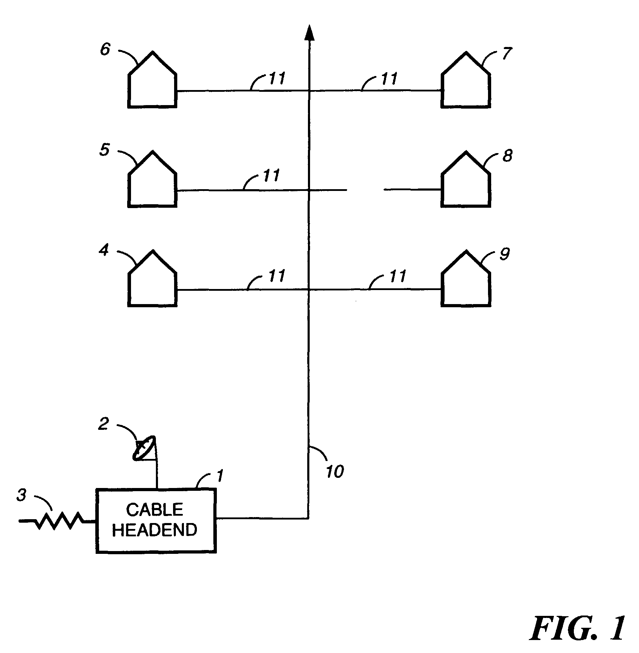

Referring to FIG. 1, there is shown a cable headend 1 coupled to a plurality of customers (or viewers) 4-7 and 9 (each represented by a house icon). A cable headend 1, which is connected via a satellite dish 2 and a landline 3 to receive television program materials and digital services, command and control information, and attachment to networks and services such as the Internet.

The output from the cable plant 1 is typically transmitted through a hybrid fiber coaxial network 10 which is organized in a tree and branch structure, passing homes in the community. The icons representing homes 4, 5, 6, 7, and 9 represent cable customers, shown by connection to the cable plant 11. The home 8 is not a cable subscriber and hence is not connected to the network 10. According to one embodiment, the cable company 1 can transmit program content (e.g., television programs) and triggers to activate display of advertising material pre-stored at the viewers' units (e.g., a set-top box coupled to a television receiver or a data handling apparatus with a display). A programming distributor will generally obtain information from its customers that is of great use to advertising people. In today's broadcast television environment there is no possibility for directing signals at an individual viewer's unit. In the system of FIG. 1 the cable company 1 can transmit triggers that are recognized at the viewer's unit and used to select certain kinds of advertising items (or segments) or to select specific advertisements for display to the viewer.

Thus the system topology shown in FIG. 1 also represents a new business model for selling advertising in a network such as a cable network or a public data network such as the Internet. This business model enables the following offering. It enables the cable company to now "sell" a home based on time. For example, an advertiser may buy 1234 Any street between 6AM and 5PM to show commercials for toys.

The cable company can now sell a number of impressions (viewings of the commercials) which can be directed to different homes at different repetition rates. For example, there is a relationship between number of repetitions of a commercial and its effectiveness. Too few repetitions or too many will not result in the desired consumer behavior, on a statistical basis.

As an example, suppose a car advertiser determines that for owners of a five year old vehicle, 10-15 viewings of an advertisement for a new vehicle has maximum effectiveness, while for owners of a two year old vehicle, 30 repetitions are better.

Additionally, the ads can be marked as "not to repeat" for a period of program play so as not to irritate the viewers. This rest period can be different for each commercial, or may not exist at all (i.e., be randomly generated) .

The homes selected can be "bought" based on demographics that the cable company is not even aware of. In the previous example, the homes can be "bought" by street address, but the car advertiser selection of those homes may be based on marketing information known to the car advertiser, such as survey data, or previous car buying behavior, which is not known to the cable company.

In this model, an advertiser "buys" a set number of plays at 1234 Anystreet, possibly within certain time of day limits. The advertiser provides the cable company with the commercials they wish to have played. The cable company ensures that the commercials are available at 1234 Any street, through one of several means. An apparatus, at 1234 Any street (either the set top box used to play the programs from the cable, or an associated device) inserts the commercials into the program. Once the commercial has been played, the apparatus logs the play for reporting to the cable company and/or advertiser. With this method, regardless of what channel is being watched, the same commercial will be played.

Devices exist today which record a program off the air, and play it back from a VCR with no delay, so that users can pause or delay a currently broadcast program. If these devices are used in combination with the invention, a subscriber could change channels in the middle of an ad, with the result of simply continuing the ad until it is complete, and then playing the new channel's program from the point where the channel was turned.

**Getting the Commercials to the Households.** There are several ways in which the cable company can ensure the commercials are available at the homes. Commercials can be downloaded to a set top box with storage capabilities through the cable; they can be distributed via a form of removable media, such as CDS, or tape; they can be broadcast to an apparatus with storage capabilities.

The advertiser can buy 15,000 impressions targeted to 1,000 homes where the owners have a five year old vehicle, and an additional 15,000 targeted to 500 homes where the owner has a two year old vehicle. This will ensure the ad is played for the most effective number of repetitions per household.

The cable company can now sell "exclusives." That is, the cable company can sell the following product to an advertiser: the cable company can agree not to "sell" 1234 Any street to anyone else advertising in the particular industry for a set period of time.

These new models provide benefits primarily for the cable company and for advertisers. For the audience, this invention results in commercials that may be more interesting or at least more germane. However, the audience will most likely be unaware of any special arrangements. For the cable company, these models provide a new source of revenue. For the advertisers, this provides more efficient ads in that the audience viewing them is selectable, and the number of plays to the audience is well controlled.

**Triggering the play of commercials at the households.** Triggering of commercials to be inserted into the program stream can be done through a variety of mechanisms. The insert can be done via time synchronization, inband triggers, out of band triggers, or conditional triggers. Thus, the display of a specific commercial can be "triggered" various ways.

**Time synchronization.** Commercials can be played based on a previously determined time of day, per channel, so that they will not interfere with advertising sold via other business models. These commercials can be played based on a previously determined time of day, per channel group, in a similar fashion. The times may be invariant, or may differ from day to day controlled by commercial playlists which have been distributed to the household.

**Outband triggers.** The same triggers can be supplied through out band methods. For example, a signaling channel may be allocated from the unused cable capacity, carrying triggers for multiple program channels. The signaling channel could be delivered over a telephone line, or wireless means. If there is an "IP to the wall" service in place, the signaling could be delivered over that connection.

**Inband triggers.** Commercials can be played based on inband triggers. That is, the program stream can contain triggers recognized by the set top box such that the box will play the commercial when it receives the trigger. This generic trigger mechanism can be implemented in either analog or digital streams. In the analog case, one implementation would be to use a signal in the VBvertical blanking interval (VBI). Another would be to use a signal embedded in the program itself (i.e., video datahiding). Different triggers can be used to signal commercials of different lengths. This assures that commercials play in the correct spot, for the correct length.

**Conditional triggers.** A conditional trigger mechanism includes additional information as to what kind of commercial should be played. That is, if the program broadcast lends itself to food commercials, a "food" trigger can be sent. The set top box will select a "food" commercial from its store of the correct length, and play it, with the appropriate logging. One house may receive a fast food commercial, while another would receive a sweetened breakfast cereal commercial. In cases where a digital playback device with storage is used, it would not be necessary to select a commercial of any particular length because the received data could be buffered to adjust for the commercial's length.

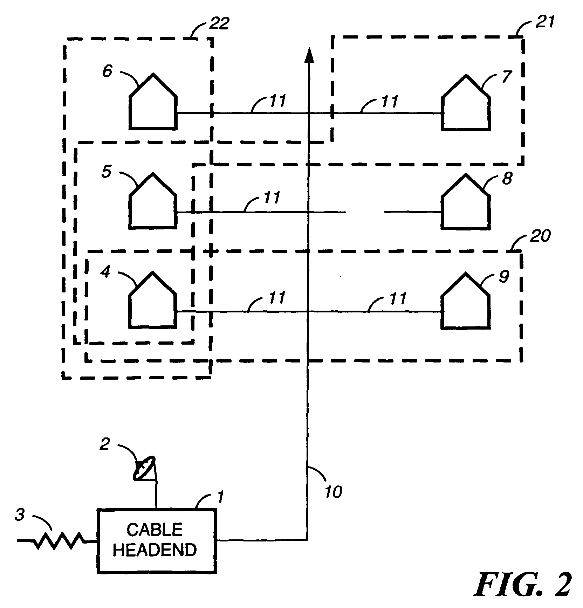

FIG. 2 shows Receiving Groups in the neighborhood comprising homes 4-9. Group 20 is composed of houses 4 and 9; group 21 is composed of houses 7, 5, and 4; and group 22 is composed of houses 6 and 4. By way of example, group 20 is "purchased" by a beer company to advertise its major brand. The advertising agency of the beer company contracts with the cable company to show 100 impressions of a beer ad to houses 4 and 9. The advertising agency has already determined a high likelihood of beer consumers in households 4 and 9, and therefore contracts with the cable company to deliver their beer commercial to optimize for maximum effectiveness in encouraging beer purchase in those households. Similarly group 22 has been "purchased" by a diaper company to advertise its major brand. The advertising agency of the diaper company contracts with the cable company to show 30 impressions of a diaper ad to houses in group 22, having determined that 30 is the optimum number of repetitions to encourage diaper purchase in homes with infants.

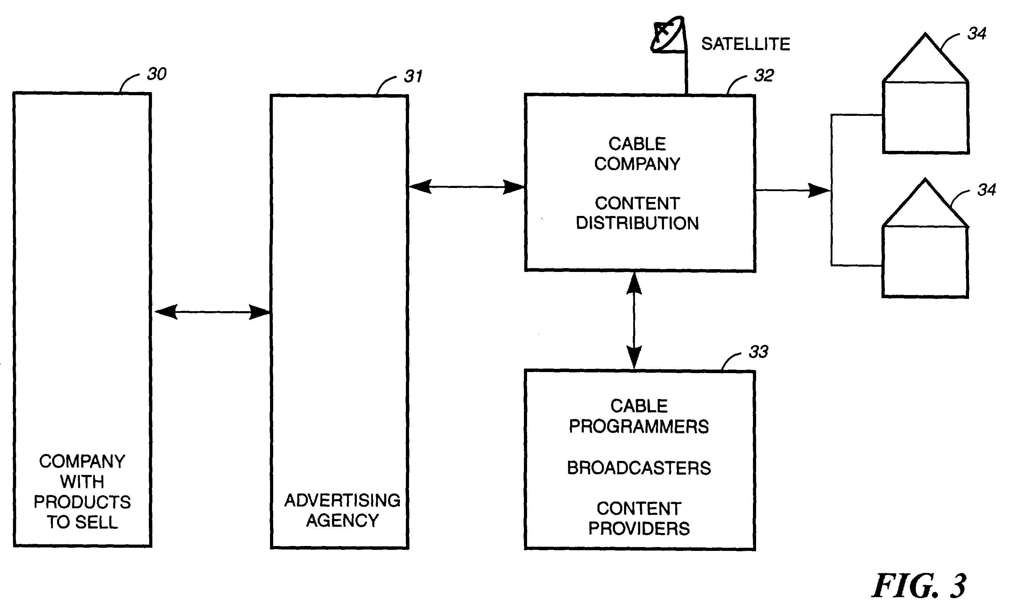

FIG. 3 shows the business relationships involved in a business model in accordance with the invention. Companies 30 with products to sell have a relationship with advertising agencies 31. The advertising agencies and the companies 30 select the best "advertising venues," in this model, the best demographics, neighborhoods, and individual households to which the advertising should be targeted. The agencies 31 have a business arrangement with cable companies 32 which have as subscribers those households selected. The cable company has a relationship with cable programmers and other content provider's (33). Their agreements specify which commercials may be provided at the households, and which should remain untouched as provided with the channel or programming. (For example, it may be channels 50-80 candidates for personalized household commercial playback, but no other channels are.) It may be that only selected time slots on various channels are permissible to use for personalized household commercial playback. The cable company 32 also has a relationship with its subscribers, in households 34.

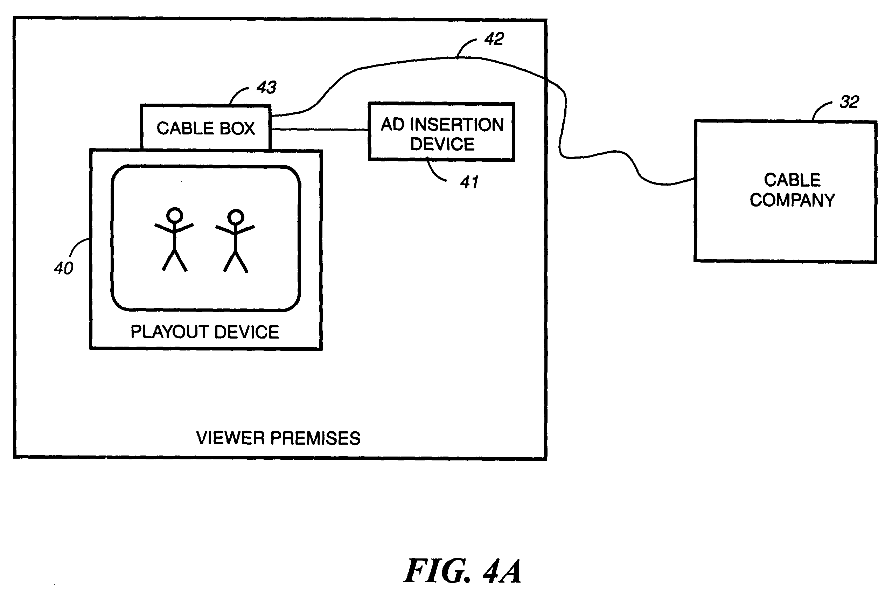

FIG. 4A shows a device for ad insertion 41. In the household is a playout device 40, such as a television receiver, a set top box 43 and an associated device for ad insertion 41. The device for ad insertion 41 may be implemented as a part of the set top box, or as a standalone unit coupled thereto. The set top 43 is connected via coax 42 to the cable company 32. The device for ad insertion 41 is connected either directly to the coax and thereby to the cable company, or indirectly through the set top box, or other suitable connection means.

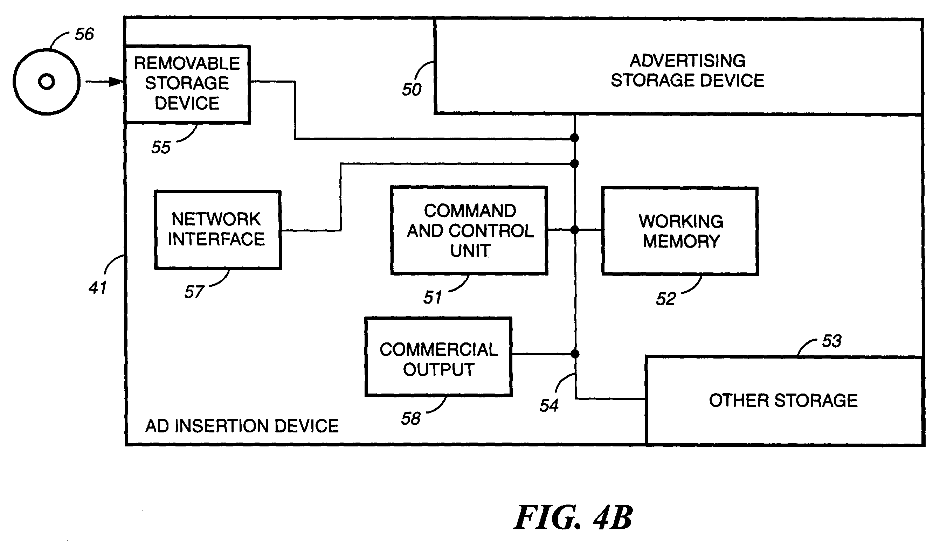

FIG. 43 shows more detail on the ad insertion device 41. The device 41 contains a means for command and control 51 (e.g., a microprocessor), a working memory (e.g., RAM) 52, and storage for ads (e.g., a hard disk drive) 50. It also contains other storage 53 for other information such as playlists, algorithms and logs, , or program content for display, and a connecting bus 54. The storage 53 can also be used to store computer-readable instructions for adapting the device 41 to operate according to the invention. The device 41 can be implemented as a specialized device or a programmable information handling system such as a personal computer. The ad insertion device 41 can include a removable storage device such as a CD ROM drive 55 for receiving CD ROMs 56 or other machine readable media containing the advertising (the machine readable media can take the form of tangible media or an information signal received over a network) . The ad insertion device can optionally include a network interface 57 enabling it to receive data and instructions over the network. The device also includes a commercial output 58 for outputting the commercial in a proper format (e.g., NTSC, PAL, MPEG2) and appropriate modulation and control information. In the case of digital transmissions, using multiplexed digital streams, the device 41 will perform de-multiplexing, splicing, insertion and re-multiplexing as necessary. All of the components included in the ad insertion device 41 can also be implemented in a set top box or a suitable television receiver. In operation the device 41 is programmed (or wired) to recognize triggers for the display of the stored ads. The programming can be stored in storage device 50 or elsewhere in the device 41. The various devices shown in FIG. 4B are all shown coupled to a bus 54 but other connections and well known devices may also be included and have been omitted for purposes of simplicity.

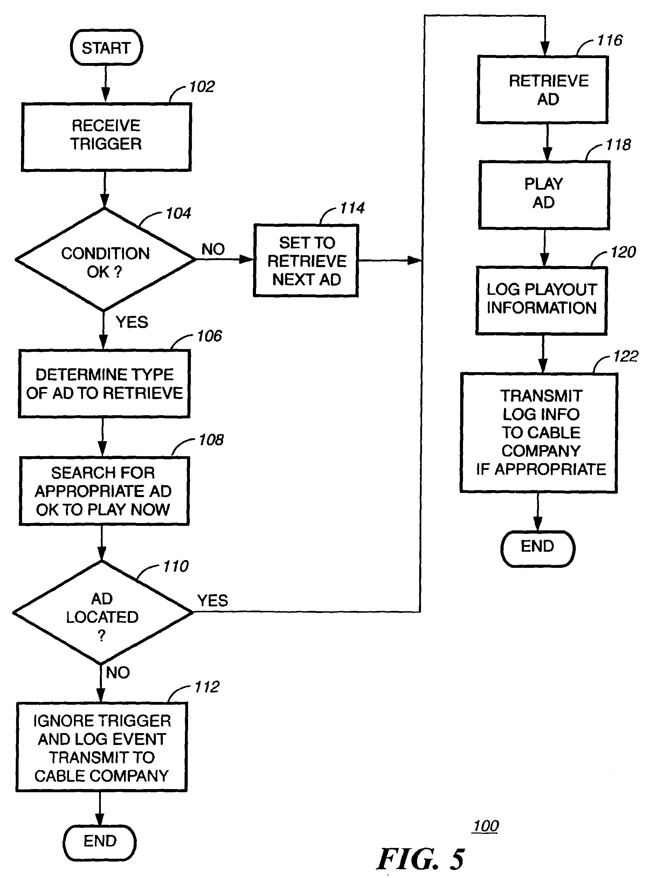

FIG. 5 shows the flow of what happens when a trigger for playout is received at the device for ad insertion. The trigger is received, or recognized, (step 102), and checked for additional (conditional) information (decision 104). If no additional information is available in the trigger, the next ad is selected (step 114). If the trigger is conditional a determination 106 is then made as to the type of ad to retrieve. If the trigger is for a specific ad type, the store is searched (step 108) for a matching ad which is ready to play. A decision 110 is then made to determine whether an ad has been located. It may be that no ads are found (none exist in the store, or all the matching ads have been played sufficiently recently that they are within the rest period following last play). If an ad is not located, the trigger is ignored and the event logged (step 112). The log may be transmitted to the cable company at this time, since it is in effect, an exception report. If an ad is located, it is retrieved and played (step 116 and step 118). The playout information is logged (step 120), and if appropriate sent to the cable company (step 122) .

The method as described above is performed at a viewer's station, such as a set-top box or a television unit adapted to operate in accordance with the invention. However, other aspects of the invention can be performed at the head end of a cable or other network.

Another alternative method of inserting advertising comprises the steps of receiving information relating to viewers receiving the audio/video programming; transmitting program content to a plurality of viewers; providing a plurality of commercials to the viewers for storage at a viewer storage device; transmitting a trigger for causing transmission of selected commercials to selected viewers at selected times; and receiving payment from the viewer for triggering the display of selected commercials to selected viewers at selected times. Each of the selected commercials and selected times are selected by the viewer. Thus, for example, a viewer on a diet can pay extra for not receiving advertising for fattening foods or for receiving commercials relating to diet or healthy foods only. This is possible by virtue of the viewer unit being adapted to respond to the received triggers for only the selected commercials.

According to another aspect of the invention a new business model is established, disassociating the audience from the show being broadcast. In this business model, the cable company "sells" the attentions of its subscribers to advertisers independent of the shows being broadcast, or the shows being watched. In other words, the cable company "sells" the subscribers at 1234 Anystreet to interested advertisers

## Claims

1. A method for displaying advertising characterised by:
storing advertising, comprising a plurality of commercials, within a storage area (50) in a viewer unit (40);
recognizing program content, via a network, for display thereof;
receiving (102) a trigger, wherein the trigger calls for display of at least one specified commercial from the stored commercials; and
displaying (118) the at least one selected commercial responsive to the trigger, wherein the at least one selected commercial is selected based on viewer characters.

2. The method of claim 1 wherein the step of receiving (102) a trigger comprises one or more of the following:
(i) receiving instructions to display a specified commercial at a specified time or at specified intervals;
(ii) receiving a conditional trigger specifying the kind of commercial to be displayed; or
(iii) searching (108) the viewer's storage area (50) for a commercial of the kind specified that is of the correct length for the program gap during which the commercial is to be displayed.

3. The method of claim 1 or 2 wherein the viewer characteristics include preferences provided by the user.

4. The method of claim 1, 2 or 3 wherein the trigger signal is recognized within the program stream.

5. The method of any of claims 1 to 4 wherein the step of receiving a trigger comprises retrieving the next commercial in the viewer's storage area.

6. The method of any of claims 1 to 5 further comprising logging (120) the display of the commercial.

7. The method of any of claims 1 to 6 wherein the trigger identifies a group of viewers and the method comprises the step of displaying a selected commercial, responsive to the identification of the group as being the group to which the viewer unit belongs.

8. The method of any of claims 1 to 7 wherein the selected commercial is played on any channel selected by the viewer such that any change in channel does affect the display of the commercial, provided that the channel is in a specific group of channels which comprises at least one of the channels available for playback.

9. The method of any of claims 1 to 8 wherein the commercial to be displayed is selected as a function of the channel being viewed.

10. A method for displaying advertising comprising:
transmitting advertising to a viewer unit, the advertising comprising a plurality of commercials, for storage within a storage area in a viewer unit;
transmitting program content to the viewer unit via a network for display at the viewer unit; and
triggering a display of at least one selected commercial from the plurality of commercials stored at the viewer unit, wherein the at least one commercial to be displayed responsive to the triggering, is selected as a function of viewer demographics.

11. The method of claim 10 wherein the triggering step comprises one or more of the following:
(i) transmitting a signal causing display of at least one specific commercial at a specified time or at specified time intervals;
(ii) transmitting a conditional trigger specifying the kind of commercial to be displayed; or
(iii) transmitting at least one trigger signal within the program stream.

12. A playout device characterised by:
a receiver (43) for receiving program content from a source and for displaying the signals in a display device;
storage space (51, 53) for storing at least parts of the received program content and for storing advertising comprising commercials; and
means (41, 51) for inserting the stored advertising in received program content, responsive to receiving a trigger.

13. The playout device of claim 12 further comprising means for displaying a specified type of commercial, responsive to recognizing a conditional trigger for that type of commercial.

14. The playout device of claim 12 further comprising means for displaying at least one specified commercial that is of the correct length for the gap in the program stream during which the at least one commercial is to be displayed.

15. The playout device of claim 12, 13 or 14 further comprising means for buffering the received program stream and for inserting advertising of variable length during playback of the buffered program stream.

16. The playout device of any of claims 12 to 14 further comprising means for displaying at least one triggered commercial at a triggered time on any channel selected by the viewer, provided that the channel is within a specific group of channels available for playback.

17. A machine-readable medium characterised by program instructions for:
storing advertising, comprising a plurality of commercials, within a storage area in a viewer unit;
receiving program content, via a network, for display thereof;
recognizing a trigger, wherein the trigger calls for display of at least one specified commercial from the stored commercials; and
displaying the at least one selected commercial responsive to the trigger, wherein the at least one selected commercial is selected based on viewer characteristics.

18. A machine-readable medium comprising instructions for:
transmitting advertising to a viewer unit, the advertising comprising a plurality of commercials, for storage within a storage area in a viewer unit;
transmitting program content to the viewer unit via a network for display at the viewer unit; and
triggering a display of at least one selected commercial from the plurality of commercials stored at the viewer unit, wherein the at least one commercial to be displayed responsive to the triggering, is selected as a function of viewer demographics.

19. A method for selling advertising by a provider of audio/video programming comprising;
receiving information relating to viewers receiving the audio/video programming;
providing the information to advertisers;
transmitting program content to a plurality of viewers;
providing a plurality of commercials to the viewers for storage at a viewer storage device;
transmitting a trigger for causing transmission of selected commercials to selected viewers at selected times; and
receiving payment from the advertises for triggering the display of selected commercials to selected viewers at selected times, wherein each of the selected commercials and selected times are selected by the advertiser on the basis of the demographics or characteristics of the viewers that receive the triggers associated with said selected commercials and selected times.

20. A method for selling advertising by a provider of audio/video programming comprising;
receiving information relating to viewers receiving the audio/video programming;
transmitting program content to a plurality of viewers;
providing a plurality of commercials to the viewers for storage at a viewer storage device;
transmitting a trigger for causing transmission of selected commercials to selected viewers at selected times; and
receiving payment from the viewer for triggering the display of selected commercials to selected viewers at selected times, wherein each of the selected commercials and selected times are selected by the viewer.
